# EUROPÄISCHE PATENTSCHRIFT

(11) **EP 0 510 556 B1**
(45) Veröffentlichungstag und Bekanntmachung des Hinweises auf die Patenterteilung: **13.09.1995**
(21) Anmeldenummer: 92106727.8
(22) Anmeldetag: 18.04.1992
(51) Int. Cl.: B64C 31/02, B64D 33/10

(54) **Triebwerk für ein Motorsegelflugzeug**
Propulsion unit for motorized glider
Propulseur pour planeur à moteur

(30) Priorität: 18.04.1991 DE 4112659
(43) Veröffentlichungstag der Anmeldung: 28.10.1992
(73) Patentinhaber: Gnieser GmbH, D-71404 Korb (DE)
(72) Erfinder: Eiermann, Dankwart, W-8995 Weissensberg-West (DE); Fischer, Manfred, W-8990 Lindau (DE); Baier, Wolfgang, W-8726 Gochsheim (DE)
(74) Vertreter: Wilhelm & Dauster Patentanwälte European Patent Attorneys

(56) Entgegenhaltungen:
- CH-A- 676 350
- DE-A- 2 821 962
- DE-U- 9 107 512
- LU-A- 84 581

## Beschreibung

Die Erfindung betrifft ein Triebwerk für ein Motorsegelflugzeug mit einem einen Propeller tragenden Arm, der für einen Motorbetrieb aus dem Rumpf des Motorseglers ausschwenkbar und für einen Segelbetrieb wieder einschwenkbar ist, wobei zum Antrieb des Propellers eine Rotationskolbenbrennkraftmaschine vorgesehen ist, die zusammen mit Zusatzaggregaten im Rumpf unterhalb des Armes stationär angeordnet ist und die innerhalb des Rumpfes vor ihrer Ansaugöffnung und in ihrer Abgasleitung Schalldämpfer aufweist.

Bei einem bekannten Triebwerk der eingangs genannten Art (CH 676 350 A5) ist vorgesehen, daß der ausschwenkbare Arm nur den Propeller trägt, der von dem Antriebsmotor, beispielsweise einer Rotationskolbenbrennkraftmaschine, über einen Riementrieb angetrieben wird. Die für den Antriebsmotor erforderliche Kühleinrichtung ist ebenfalls innerhalb des Rumpfes angeordnet, was zu einem erhöhten Raumbedarf und/oder zu einer besonderen Gestaltung der Rumpfwandung bezüglich Lufteintrittsöffnungen o.dgl. führt.

Außerdem ist eine Anordnung bekannt, bei der ein luftgekühlter Motor mit Untersetzungsgetriebe und Propeller auf einem ausschwenkbaren Arm montiert ist.

Der Erfindung liegt die Aufgabe zugrunde, ein Triebwerk der eingangs genannten Art bezüglich des Raumbedarfes innerhalb des Rumpfes zu verbessern.

Diese Aufgabe wird dadurch gelöst, daß ein Wärmetauscher für das Kühlmittel der flüssigkeitsgekühlten Rotationskolbenbrennkraftmaschine an der Rückseite des Armes im Drehkreis des Propellers angebracht ist. Außerdem ist der Arm mittels einer Schraubspindel aus- und einschwenkbar.

Durch die Anordnung des Wärmetauschers für das Kühlmittel der flüssigkeitsgekühlten Rotationskolbenbrennkraftmaschine an dem Arm im Drehkreis des Propellers wird auch mit einem relativ kleinen Warmetauscher eine wirksame Kühlung erreicht, ohne daß es einer besonderen Gestaltung des Rumpfes oder seiner Verkleidung bezüglich einer Luftführung bedarf. Dadurch wird insgesamt auch bei eingeschwenkter Position des Armes nur ein geringer Raum innerhalb des üblicherweise engen Rumpfraumes benötigt, in welchem die Rotationskolbenbrennkraftmaschine einschließlich ihrer Zusatzaggregate wie Vergaser, Ölpumpe, Generator o.dgl. untergebracht werden kann. Ebenso lassen sich Schalldämpfer von erheblichen Abmessungen unterbringen.

Ein Ausführungsbeispiel der Erfindung wird im einzelnen anhand der Zeichnungen beschrieben. Es zeigen
- Figur 1: einen rückwärtigen Rumpfabschnitt im medialen Längsschnitt bei eingefahrenem Propeller
- Figur 2: der gleiche Längsschnitt wie in Figur 1 mit ausgefahrenem Propeller
- Figur 3: einen axialen Schnitt durch Kuppelung und Freilauf an der Abtriebsscheibe des Motors
- Figur 4: einen axialen Schnitt durch die Antriebsscheibe des Propellers
- Figur 5: eine schematische perspektivische Darstellung der Aufhängung des Triebwerks im Rumpf.

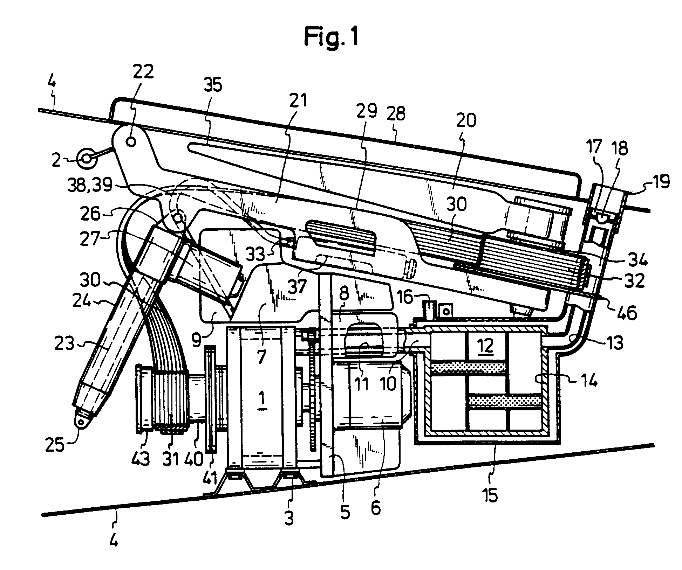

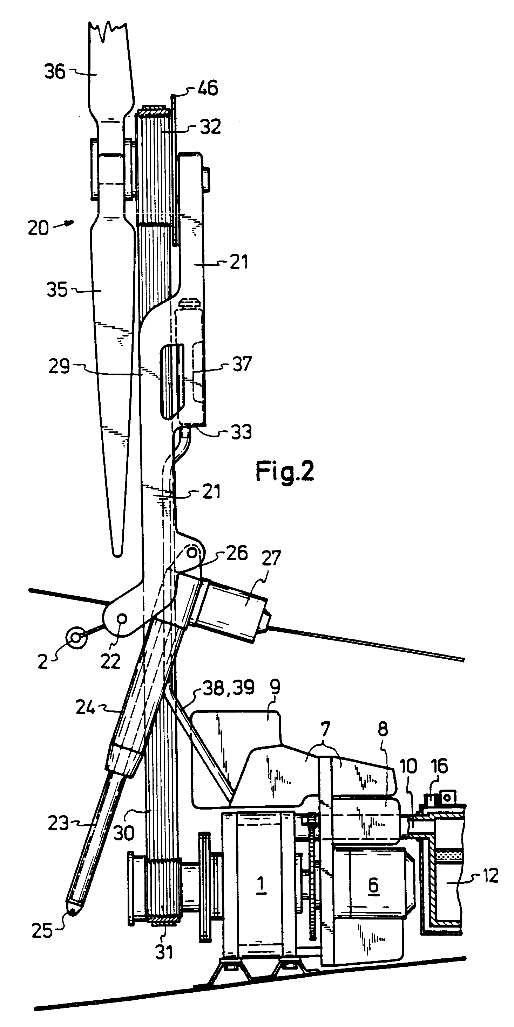

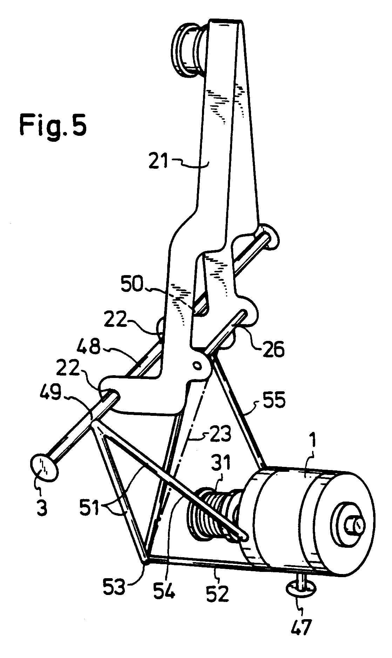

Zu Figur 1 und 2:
Der Motor 1 ist an drei Punkten 2 und 3 an der aus faserverstärktem Kunststoff bestehenden Schale des Rumpfes 4 des Segelflugzeugs mit einem in Figur 5 dargestellten Rahmenwerk aufgehängt. Der dritte Punkt befindet sich spiegelbildlich zu Punkt 2 an der in Figur 1 abgenommenen backbordseitigen Schalenhälfte. Der Motor 1 ist ein Rotationskolbenmotor der Trochoidenbauweise, der infolge seiner niedrigen Bauhöhe an dieser Stelle im Rumpf untergebracht werden kann, so daß der eingefahrene Propeller mit seinem Schwenkarm zusammen mit den Zusatzaggregaten des Motors noch genügend Platz findet. Mit dem Motor und dem unteren Befestigungspunkt 3 ist ein Rahmen 5 verbunden, der die Zusatzaggregate des Motors 1 trägt, und zwar einen Stromgenerator 6 für das elektrische System des Flugzeugs, einen Schalldämpfender 7 in der Ansaugleitung, eine Ölpumpe 8 und den Vergaser 9. Die Abgasleitung 10 des Motors 1 wird durch eine doppelwandige Balganordnug 11 in einen Schalldämpfer 12 geführt, um die Motorschwingungen und die Auspuffgeräusche abzudämpfen. Der Schalldämpfer 12 und das aus ihm herausführende, in der Oberseite des Rumpfes 4 mündende Abgasrohr 13 sind doppelwandig. Die innere Wandung 14 des Schalldämpfers besteht aus wärmedämmenden feinporigen Platten aus unverbrennbarem organischem Werkstoff. Seine äußere aus Metallblech gebildete Wandung 15 umschließt einen bei der Öffnung 16 in den Wandzwischenraum eintretenden Strom von Kaltluft, die an der Abgasaustrittsöffnung 17 des doppelwandigen Abgasrohrs 13 durch den Abgasstrom abgesaugt wird. Zu diesem Zweck ist die innere Wandung des Abgasrohres 13 kürzer als die äußere und der Strom des Abgases wird durch eine venturirohrartige Ausbildung eines Strömungskörpers 18 beschleunigt. An der Abgasaustrittsöffnung 17 kann ein diese umschließendes kurzes Rohrstück 19 beim Motorbetrieb aus der Schale des Rumpfes 4 ausgefahren werden, in dem durch den Fahrtwind eine Kaminwirkung entsteht.

Der Propeller 20 ist an einem Arm 21 angeordnet, der nach oben um Lager 22 schwenkbar ist. Diese Lager 22 sind über das in Figur 5 dargestellte Rahmenwerk an der Schale des Rumpfes 4 verankert. Die Schwenkung des Armes 21 wird von einer Schraubspindel 23 bewirkt, die in einer Führung 24 angeordnet ist. Die Schraubspindel 23 ist an ihrem unteren Ende 25 in der senkrechten Mittelebene des Rumpfes schwenkbar an dem in Figur 5 dargestellten Rahmenwerk befestigt. Die Führung 24 ist an ihrem oberen Ende 26 am Arm 21 angelenkt und wird durch einen an ihr vorgesehenen Elektromotor an der Schraubspindel 23 auf- und abwärts bewegt, um den Arm 21 bis zu seiner senkrechten Lage auszufahren und wieder in den Rumpf einzuziehen. Die Schale des Rumpfes 4 weist einen mit Klappen 28 verschließbaren Schlitz von der Länge des Armes 21 auf, aus dem dieser ausgeschwenkt werden kann und deren Klappen 28 nach Einfahren des Armes 21 mit der Rumpfoberfläche wieder glatt fluchten.

Der Arm 21 besteht aus V-förmig sich nach unten spreizenden Teilen 29, von denen in Figur 1 nur der backbordseitige zu sehen ist. Zwischen ihnen ist ein Antriebsriemen 30 mit mehrfachem V-förmigen Profil (Poly-V-Riemen) geführt, der eine untere Abtriebsscheibe 31 an der Welle des Motors 1 mit einer oberen Abtriebsscheibe 32 des Propellers 20 verbindet. Diese paralellen Teile 29 sind bei 33 zurückgekröpft, so daß sie den Antriebsriemen 30 abdecken und sein Abspringen von den Ab- und Antriebsscheiben 31, 32 beim Einschwenken des Armes 21 verhindern, da sich dabei der Abstand dieser Scheiben stark verkürzt.

Mit der Antriebsscheibe 32 ist der Propeller 20 verschraubt. Die Größe der Ab- und Antriebsscheiben 31 und 32 geben das gewünschte Untersetzungsverhältnis zwischen der Drehzahl des Motors 1 und der des Propellers 20.

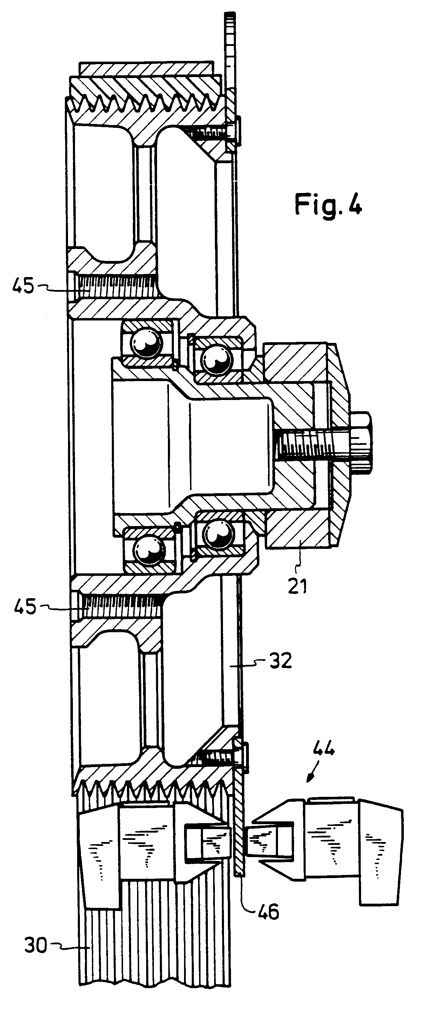

Die Flügel 35 und 36 des Propellers 20 sind gegen einen Anschlag schwenkbare Klappflügel, die beim Einfahren des Armes 21 in den Rumpf zusammengelegt werden können. Um die Propellerflügel 35, 36 in diese Lage zu bringen, kann eine am Arm 21 feststehende Scheibenbremse 44 (Figur 4) vorgesehen sein, die den Propeller 20 in der mit dem Arm 21 paralellen Lage anhält, so daß der untere Flügel 34 an seinem Anschlag festgehalten wird und der sich weiterdrehende obere Flügel 36 an ihm anschlägt. Die Scheibenbremse 44 bleibt beim Ein- und Ausfahren des Armes 21 geschlossen.

An der Rückseite des Armes 21 ist ein Wärmetauscher 37 für die Kühlflüssigkeit des Motors 1 in der Höhe des Drehkreises des Propellers 20 angeordnet, der mit Zu- und Rückführschläuchen 38 ud 39 mit den Kühlhohlräumen des Motors verbunden ist. Dieser Wärmetauscher 37 erfordert einen nicht unbeträchtlichen Platz beim Einfahren des Armes 21, der im Rumpfraum nur infolge der niedrigen Bauhöhe des Rotationskolbenmotors 1 zur Verfügung steht.

Der Arm 21 hat in seinem ausgefahrenen Zustand keinen Anschlag, er wird jedoch in seiner Endlage beim Ausfahren durch die Schraubspindel 23 fixiert. Diese hat aber so viel Spiel, daß der Antriebsriemen 30 durch den Zug des Propellers 20 durch das Nachvorneziehen des Armes 21 gespannt wird, das heißt, je mehr der Propeller zieht, desto größer wird die Haftreibung des Antriebsriemens an den Ab- und Antriebscheiben 31, 32.

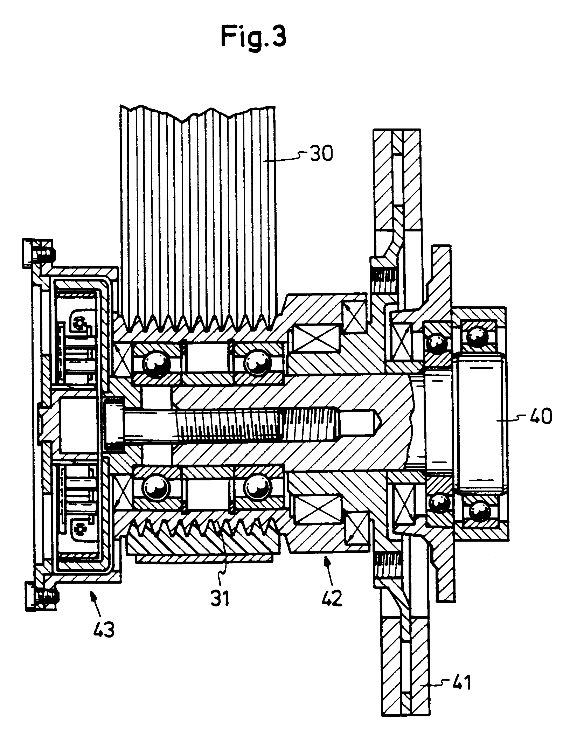

Zu Figur 3:
Mit 40 ist die Abtriebswelle des in der Zeichnung rechts zu denkenden Motors 1 und mit 41 dessen Schwungscheibe bezeichnet. Zwischen Abtriebsscheibe 31 und Abtriebswelle 40 ist ein Freilauf 42 angeordnet, auf der in der Zeichnung linken Seite eine Fliehkraftkuppelung 43 zwischen Abtriebswelle 40 und Abtriebsscheibe 31. Die Wirkungsweise ist folgende:
Bei stehendem Motor 1 ist der Freilauf offen, so daß bei Luftstart der Propeller vom Fahrtwind frei gedreht werden kann. Er erreicht sofort hohe Drehzahlen, wird aber zum Beispiel bei 2500 Umdrehungen/Min. durch Einschalten der Fliehkraftkuppelung 43 auf die Antriebswelle 40 geschaltet, wodurch der Motor angefahren wird. Sobald der Motor dreht, wird der Freilauf 42 geschlossen und der Motor treibt den Propeller 20 an. Es wird also der Motor immer, auch bei Versagen der Batteriezündung, sicher gestartet. Bei Bodenstart nimmt die Abtriebswelle 40 durch sofortiges Schliessen des Freilaufes 42 die Abtriebsscheibe 31 und den Propeller 20 mit.

Figur 4 zeigt die am Ende des Armes 21 gelagerte obere Antriebsscheibe 32 des Propellers 20, der in Schraubenbuchsen 45 befestigt ist, so wie auf der rechten Seite der Zeichnung das obere Ende des Armes 21. An einer der Fangscheiben 46 für den Antriebsriemen 30 greift die Scheibenbremse 44 an.

Es können weitere Fangscheiben an den übrigen Seiten der Ab- und Antriebsscheiben 35, 36 angeordnet sein, um ein Abspringen des Antriebsriemens 30 beim Einfahren des Armes 21 zu verhindern.

Das in Figur 5 dargestellte Rahmenwerk zur Aufhängung des Triebwerks ist an den drei Punkten, und zwar bei 3 und 4 seitlich an der Innenseite des Rumpfes 4 sowie am Boden des Rumpfes bei 47 befestigt. Zwischen den seitlichen Befestigungsstellen 2 und 3 ist ein Rohr 48 verspannt, an dem bei 49 und 50 ein V-förmig gebogenes nach unten weisendes Rohr 51 angeschweißt ist. Ein waagrechtes Rohr 52 ist an der Umbiegung 53 des Rohres 51 mit seinem vorderen Ende verschweißt und mit seinem hinteren Ende am Gehäuse des Motors verschraubt. Der Motor 1 ist seinerseits mit der unteren Befestigungsstelle 47 starr verbunden. Desweiteren sind bei 49 und 50 Rohre 54 und 55 an dem Rohr 48 angeschweißt, die schräg nach unten weisend mit dem Gehäuse des Motors 1 an ihrem anderen Ende verschraubt sind. Es entsteht hierdurch ein starres Dreiecksgitterwerk. An dem ersten Rohr 48 befinden sich die Schwenklager 22 des Armes 21. An der Umbiegung 53 des Rohres 51 ist in einem Schwenklager das untere Ende 25 der Schraubspindel 23 angelenkt, die, in der Zeichnung zu Figur 5, um die Gitterkonstruktion nicht zu verdecken, ebenso wie die Führung 24 nur durch eine strichpunktierte Linie angedeutet ist.

### Bezugszeichenverzeichnis

- 1: Motor
- 2, 3: Befestigungspunkte
- 4: Rumpf
- 5: Rahmen
- 6: Stromgenerator
- 7: Schalldämpfer, Ansaugleitung
- 8: Ölpumpe
- 9: Vergaser
- 10: Abgasleitung
- 11: Balkenanordnung
- 12: Schalldämpfer, Abgasleitung
- 13: Abgasrohr
- 14: innere Wandung von 12
- 15: äußere Wandung von 12
- 16: Öffnung für Kaltluft
- 17: Abgasaustrittsöffnung
- 18: Strömungskörper
- 19: Rohrstück an 17
- 20: Propeller
- 21: Arm
- 22: Schwenklager von 21
- 23: Schraubspindel
- 24: Führung
- 25: unteres Ende von 24
- 26: angelenktes Teil von 24
- 27: E-Motor an 24
- 28: Klappe an 4
- 29: paralelle Teile von 21
- 30: Antriebsriemen
- 31: untere Abtriebsscheibe
- 32: obere Antriebsscheibe
- 33: Kröpfung von 29
- 34: Welle zu 20
- 35, 36: Propellerflügel
- 37: Wärmetauscher
- 38, 39: Schläuche zu 37
- 40: Abtriebswelle Motor
- 41: Schwungscheibe Motor
- 42: Freilauf
- 43: Fliehkraftkuppelung
- 44: Bremse
- 45: Schraubbuchsen zu 20
- 46: Fangscheibe
- 47: unterer Befestigungspunkt
- 48: Rohr zwischen 3 und 4
- 49, 50: Anschweißpunkte für 51
- 51: V-förmig gebogenes Rohr
- 52: waagrechtes Rohr
- 53: Umbiegung von 51
- 54, 55: Rohre zwischen 48 und 1

## Patentansprüche

1. Triebwerk für ein Motorsegelflugzeug mit einem einen Propeller (20) tragenden Arm (21), der für einen Motorbetrieb aus dem Rumpf (4) des Motorseglers ausschwenkbar und für einen Segelbetrieb wieder einschwenkbar ist, wobei zum Antrieb des Propellers eine Rotationskolbenbrennkraftmaschine (1) vorgesehen ist, die zusammen mit Zusatzaggregaten im Rumpf unterhalb des Armes stationär angeordnet ist und die innerhalb des Rumpfes vor ihrer Ansaugöffnung und in ihrer Abgasleitung (10) Schalldämpfer (7, 12) aufweist,
**dadurch gekennzeichnet, daß** der Arm mittels einer Schraubspindel (23) aus- und einschwenkbar ist, und dadurch, daß ein Wärmetauscher (37) für das Kühlmittel der flüssigkeitsgekühlten Rotationskolbenbrennkraftmaschine (1) an der Rückseite des Armes (21) im Drehkreis des Propellers (20) angebracht ist.

2. Triebwerk nach Anspruch 1,
dadurch gekennzeichnet, daß die Abgasleitung(10) zum Schalldämpfer(12) eine doppelwandige Balgenanordnung ist und daß der Schalldämpfer(12) eine hitzebeständige Innenwandung(14) hat und im Abstand zu dieser eine metallene Außenwandung(15), zwischen denen ein Kaltluftstrom geführt und durch den Ringraum des doppelwandigen Abgasrohrs(13) bei dessen Abgasaustrittsöffnung(17) vom Strom des Abgases ins Freie abgesaugt wird.

3. Triebwerk nach Anspruch 2,
dadurch gekennzeichnet, daß um das Abgasrohr(13) ein aus dem Rumpf(4) ausfahrbares Rohrstück(19) zur Erzeugung einer Kaminwirkung im Abgas angeordnet und in der Abgasaustrittsöffnung(17) ein ein Venturirohr bildender Strömungskörper(18) zur Beschleunigung der Strömung der Kaltluft vorgesehen ist.

4. Triebwerk nach Anspruch 1,
dadurch gekennzeichnet, daß der Propeller(20) vom Motor(1) durch ein untersetzendes Riemengetriebe angetrieben wird, dessen Antriebsriemen(30) zwischen den V-förmig nach ihren Schwenklagern(22) zu gespreizten Teilen(29) des Armes(21) verläuft und beim Einschwenken des Armes(21) von diesen Teilen(29) gegen ein Abspringen von seinen Ab- und Antriebsscheiben (31, 32) gesichert ist.

5. Triebwerk nach Anspruch 1,4,
dadurch gekennzeichnet, daß an der Antriebsscheibe (32) des Riemengetriebes am oberen Ende des Armes (21) eine Fangscheibe(46) für den Antriebsriemen(30) und am Arm(21) eine an dieser Fangscheibe(46) angreifende Scheibenbremse(44) vorgesehen ist.

6. Triebwerk nach Anspruch 1,
dadurch gekennzeichnet, daß zwischen der Antriebswelle(40) des Motors(1) und der Abtriebsscheibe(31) eine auf die Anlaßdrehzahl des Motors(1) eingestellte Fliehkraftkuppelung(43) und ein Freilauf(42) angeordnet sind.

7. Triebwerk nach Anspruch 6,
dadurch gekennzeichnet, daß der Freilauf(42) in der Abtriebsscheibe(31) und die Fliehkraftkuppelung(43) an dem Ende der Antriebswelle(40) an der Außenseite der Abtriebsscheibe(31) angeordnet sind.

8. Triebwerk nach Anspruch 1,
dadurch gekennzeichnet, daß es an zwei seitlichen Befestigungspunkten(2, 3) mit den Seiteninnenwänden des Rumpfes(4) und mit einem Befestigungspunkt(47) mit dem Boden des Rumpfes(4) über ein Rahmenwerk lösbar verbunden ist.

9. Triebwerk nach Anspruch 7,
dadurch gekennzeichnet, daß das Rahmenwerk aus einem zwischen den seitlichen Befestigungspunkten(2, 3) verspannten ersten Rohr(48) sowie einem mit ihm an Verschweißungspunkten(49, 50) verbundenen, mit seiner Umbiegungsstelle(53) nach unten weisenden V-förmig gebogenen Rohr(51), einem an dieser Umbiegungsstelle (53) angeschweißten und mit seinem hinteren Ende mit dem Gehäuse des Motors(1) verschraubten waagrechten Rohr(52) und zwei an den Verschweißungspunkten(49, 50) des ersten Rohres verschweißten Rohren(4, 55) besteht, die mit ihren hinteren Enden mit dem Gehäuse des Motors(1) verschraubt sind, wobei das untere Ende der Schraubspindel(23) an der Umbiegungsstelle(53) mit angelenkt ist und die Schwenklager(22) des Arms(21) am ersten Rohr(48) angeordnet sind.

## Claims

1. Propulsion unit for a motorised glider with an arm (21) carrying a propeller (20) and capable of being swung out of the fuselage (4) of the motorised glider for operation under power and retractable back into it for gliding operation, a rotary piston internal combustion engine (1) being provided for driving the propeller and being arranged stationary within the fuselage below the arm together with its auxiliary components and having within the fuselage sound absorbers or silencers (7, 12) ahead of its induction port and in its exhaust pipe (10),
**characterised in that**
the arm is pivoted in and out by means of a screwed spindle (23) and that a heat exchanger or radiator (37) for the coolant of the liquid-cooled rotary piston engine (1) is mounted on the back of the arm (21) within the disc swept out by the propeller (20).

2. Propulsion unit according to claim 1,
characterised in that, the exhaust pipe (10) is a double-walled bellows arrangement leading to the silencer (12) and that the silencer (12) has a heat-resistant inner wall (14) and spaced from it a metallic outer wall (15), between which is conducted a flow of cold air and through the annular space of the double-walled exhaust pipe (13) is sucked into the atmosphere through its exhaust opening (17) by the flow of exhaust into the atmosphere.

3. Propulsion unit according to claim 2,
characterised in that, a tubular member (19) which can be extended out of the fuselage (4) is arranged around the exhaust pipe (13) to produce a chimney action in the exhaust gas and there is provided in the exhaust gas outlet opening (17) a flow body (18) forming a venturi pipe to accelerate the flow of cold air.

4. Propulsion unit according to claim 1,
characterised in that, the propeller (20) is driven from the engine (1) through a reducing belt drive of which the driving belt (30) runs between the V-shaped portions (29) of the arm (21) which spread out towards its pivot bearings (22) and on retraction of the arm (21) it is secured by these parts (29) against jumping off its driving and driven pulleys (31, 32).

5. Propulsion unit according to claim 1, 4,
characterised in that, there is provided on the driven pulley (32) of the belt drive on the upper end of the arm (21) a guide disc (46) for the drive belt (30) and there is provided on the arm (21) a disc brake (44) which engages this guide disc (46).

6. Propulsion unit according to claim 1,
characterised in that, a centrifugal clutch (43) set to the starting speed of the engine (1) and a free wheel (42) are arranged between the drive spindle (40) of the engine (1) and the driving pulley (31).

7. Propulsion unit according to claim 6,
characterised in that, the free wheel (42) is arranged in the driving pulley (31) and the centrifugal clutch (43) is provided on the end of the drive spindle (40) on the outer side of the driving pulley (31).

8. Propulsion unit according to claim 1,
characterised in that, it is connected detachably through a frame at two lateral attachment points (2, 3) to the insides of the side walls of the fuselage (4) and at an attachment point (47) to the floor of the fuselage (4).

9. Propulsion unit according to claim 7,
characterised in that, the frame comprises a first tube (48) held between the lateral attachment points (2, 3) as well as a tube (51) bent to a V-shape and with its apex (53) pointing downwards and welded to it at welding points (49, 50), a horizontal tube (52) welded to this apex (53) and having its rear end bolted to the housing of the engine (1) and two tubes (4, 55) welded to the welding points (49, 50) of the first tube, with their rear ends bolted to the housing of the engine (1), the lower end of the screwed spindle (23) being pivotally connected to the apex (53) and the pivotal bearing (22) of the arm (21) being arranged on the first tube (48).

## Revendications

1. Propulseur pour un planeur à moteur dont un bras (21), portant une hélice (20), est extractible du fuselage (4) du planeur pour une utilisation motorisée et rétractable pour une utilisation en planeur et, ce, de manière pivotante pour l'entraînement de l'hélice, une machine à combustion interne et à piston rotatif (1) étant prévue, qui est disposée, de manière stationnaire, avec les agrégats additionnels, dans le fuselage sous le bras et qui présente, à l'intérieur du fuselage devant son orifice d'aspiration et dans sa conduite d'échappement (10), un silencieux (7, 12), caractérisé en ce que le bras est rétractable et extractible au moyen d'une broche filetée (23) et en ce qu'un échangeur thermique (37), destiné au réfrigérant de la machine à combustion interne et à piston rotatif refroidie par liquide (1), est monté sur la face arrière du bras (21) dans le cercle de rotation de l'hélice (20).

2. Propulseur selon la revendication 1, caractérisé en ce que la conduite d'échappement (10) du silencieux (12) est un soufflet à double paroi et que le silencieux (12) présente une paroi interne incombustible (14) et, à distance de celle-ci, une paroi externe métallique (15) entre lesquelles est dirigé un courant d'air froid qui est aspiré, en passant à travers l'espace circulaire du tuyau d'échappement à double paroi (13), au niveau de l'orifice d'échappement de gaz (17), par le courant des gaz d'échappement vers l'atmosphère.

3. Propulseur selon la revendication 2, caractérisé en ce que le tuyau d'échappement (13) est entouré par une tubulure (19) pouvant sortir du fuselage (4) afin de générer un effet de cheminée dans les gaz d'échappement et en ce qu'il est prévu, dans l'orifice d'échappement des gaz (17), un corps d'écoulement (18) formant un tube de Venturi servant à accélérer l'écoulement de l'air froid.

4. Propulseur selon la revendication 1, caractérisé en ce que l'hélice (20) du moteur (1) est entraînée par un engrenage à courroie formant démultiplicateur, dont la courroie d entraînement (30) défile entre les parties (29) du bras (21), écartées en forme de V en direction de leurs paliers pivotants (22) et, au moment du basculement du bras (21) est protégée par ces parties (29) contre un décrochement de ces poulies menée et menante (31, 32).

5. Propulseur selon la revendication 1, 4, caractérisé en ce qu'il est prévu sur la poulie menante (32) de l'engrenage à courroie à l'extrémité supérieure du bras (21), une poulie d'interception (46) pour la courroie d'entraînement (30) et, sur le bras (21), un frein à disque (44) intervenant au niveau de cette poulie d'interception (46).

6. Propulseur selon la revendication 1, caractérisé en ce qu'un embrayage centrifuge (43) est réglé sur un nombre de tours pour le démarrage du moteur (1) et en ce qu'une marche à vide (42) est disposée entre l'arbre menant (40) du moteur (1) et la poulie menée (31).

7. Propulseur selon la revendication 6, caractérisé en ce que la marche à vide (42) est disposée dans la poulie menée (31) et l'embrayage centrifuge (43) à l'extrémité de l'arbre menant (40) sur la face externe de la poulie menée (31).

8. Propulseur selon la revendication 1, caractérisé en ce qu'il est relié, de manière amovible par un cadre, à deux points de fixation latéraux (2, 3) avec les parois latérales internes du fuselage (4) et, à un point de fixation (47), au fond du fuselage (4).

9. Propulseur selon la revendication 7, caractérisé en ce que le cadre se compose d'un premier tube (48) tendu entre les deux points de fixation latéraux (2, 3) ainsi qu'un tube (51) formant un coude (53) en V vers le bas et relié au premier par deux points de soudure (49, 50), d'un tube horizontal (52) vissé, par son extrémité arrière, au carter du moteur (1) et soudé à ce coude (53) et deux tubes (4, 55) qui sont soudés aux points de soudure (49, 50) du premier tube et qui sont vissés par leur extrémité arrière au carter du moteur (1), l'extrémité inférieure de la broche filetée (23) étant articulée au coude (53) et les paliers pivotants (22) du bras (21) étant disposés sur le premier tube (48).
